# EUROPÄISCHE PATENTANMELDUNG

(11) **EP 1 925 602 A1**
(43) Veröffentlichungstag der Anmeldung: **28.05.2008**
(21) Anmeldenummer: 07120705.4
(22) Anmeldetag: 14.11.2007
(51) Int. Cl.: C03C 17/30

(54) **Permanenter Griffschutz durch UV-Härtung**

(30) Priorität: 25.11.2006 DE 102006055734
(71) Anmelder: Nanogate AG, 66121 Saarbrücken (DE)
(72) Erfinder: Overs, Michael, 66440 Blieskastel (DE)
(74) Vertreter: Jönsson, Hans-Peter

(57) **Zusammenfassung**

Gegenstand der Erfindung ist ein permanenter Griffschutz für mattierte Oberflächen, insbesondere aus Glas.

## Beschreibung

Gegenstand der Erfindung ist ein permanenter Griffschutz für mattierte Glasoberflächen.

Designelemente insbesondere auf Glas werden immer stärker am Markt nachgefragt. So hat zum Beispiel die Produktion von mattiertem Glas in den letzten Jahren deutlich zugenommen. In diesem Zusammenhang werden auch Griffschutzbeschichtungen immer wichtiger; kaum ein Glas kann ohne Beschichtung ausgeliefert werden. Übliche Griffschutzbeschichtungen sind gegenüber "easy-to-clean"-Beschichtungen für transparentes Glas zwingend aus polymeren Materialien aufgebaut und bilden folglich wesentlich dickere Schichten aus.

DE 10159288 A1 beschreibt Griffschutzbeschichtungen aus vorvernetzten Silanen auf Substraten aus klarem PMMA und Edelstahl.

WO 02/50191 A2 beschreibt vorvernetzte Sol-Gel Systeme für verschiedene Substrate für Anwendungen wie Korrosionsschutz, abriebfeste Beschichtungen, Druckfarben oder Lackadditive.

DE 10 2005 005 334 A1 beschreibt Polierpasten für Metallen.

Die Systeme des Standes der Technik greifen bis auf wenige Ausnahmen auf Silikone zurück. Bei den Ausnahmen handelt es sich beispielsweise um ein Produkt der Nanogate AG (Nano-E2C 112).

Silikonsysteme haben folgende Eigenschaften: Einfache Applikation über Aufwisch- oder Polierverfahren, keine Härtung, jedoch keine dauerhafte Haltbarkeit. Eine Zerstörung der Schicht mittels handelsüblicher Reinigungsmittel ist möglich, weshalb es schnell zu Reklamationen kommen kann.

Im Handel erhältliche Systeme werden als Eigenmarke und unter Private-Label verkauft. Ihr Hauptnachteil ist die mangelnde Haltbarkeit. Im Gegensatz zu den bekannten Silikonpolymeren basiert das System der Nanogate AG auf partiell vorkondensierten organofunktionalisierten Silanen. Nach der Applikation des Materials auf dem Glas wird die Hydrolyse und Kondensation der Silane in Gegenwart vorhandener Luftfeuchtigkeit fortgesetzt. Dadurch härtet das Material in etwa 2 bis 3 Stunden vollständig aus. Im Anschluss ist das System nicht mehr mit gängigen Reinigern zu entfernen. Die Griffschutzbeschichtung ist permanent. Ein Hauptnachteil des Systems ist die lange Aushärtungsdauer und die zwingend notwendige manuelle Verarbeitung, die eine breitere industrielle Nutzung schwer möglich macht.

Die Aufgabe der vorliegenden Erfindung besteht darin, ein Griffschutzmaterial zu entwickeln, welches eine dauerhafte Wirksamkeit hat und damit den Vorteil des bereits genannten Systems der Nanogate AG aufweist. Weiterhin soll das vorgestellte System deutlich schneller aushärten und damit eine breitere industrielle Nutzung ermöglichen.

Die vorstehend genannte Aufgabe wird erfindungsgemäß gelöst durch ein auf der Oberfläche aushärtendes Polymer. In diesem Fall wird jedoch ein Material verwendet, welches mittels UV-Licht gehärtet werden kann.

Eine erste Ausführungsform der Erfindung besteht in einer mattierten gestrahlten, gebürsteten, geschliffenen oder geätzten Glasoberfläche mit einer Griffschutzbeschichtung eines vernetzten Silans der allgemeinen Formel (I)

X₃Si(CH₂)ₙY (I)

wobei
X eine hydrolysierbare Gruppe ist,
n einen Wert von 0, 1, 2 oder 3 hat und
Y eine organofunktionelle Gruppe ist.

Im Unterschied zu den bekannten beschichteten Oberflächen erzielt die erfindungsgemäße Oberfläche vor allem bei einer relativ einfach erhältlichen gestrahlten Glasoberfläche eine wesentlich hochwertigere Anmutung einer satinierten Glasoberfläche. Da Fingerabdrücke auf mattierten Glasoberflächen besonders leicht sichtbar sind, wurde überraschend aufgefunden, dass sich sogar mattierte Glasoberflächen so ausrüsten lassen, dass Fingerabdrücke nicht sichtbar sind.

Das Material wird beispielsweise mittels einer handelsüblichen Lackierpistole (hier SataJet^{®}) auf die zu beschichtenden Mattglasscheiben auflackiert. Ebenfalls möglich ist die Applikation mittels einer Sprühflasche oder Spritzflasche. Im Anschluss wird das Material verteilt und der Überschuss oberhalb der Glasspitzen abpoliert (Entfernung des überschüssigen Flüssigmaterials ist mit Hilfe eines Schwamms oder einer rotierenden Stoffhaube möglich).

Die noch feuchte Schicht wird dann durch UV-Bestrahlung gehärtet. Verwendet wird beispielsweise ein handelsübliches Laborgerät (Beltron Durchlaufstrahler, Bandgeschwindigkeit 1,5 m/min). Mit diesem Gerät sind mehrere Durchläufe notwendig, um die Schicht vollständig auszuhärten. Dabei wirkt auf die Schicht eine Energiemenge von etwa 30.000 mJ/cm² ein. Im Anschluss an die Härtung lässt man die Scheibe auf Raumtemperatur abkühlen.

Die Schicht kann dann weder mit Wasser noch mit einem Gemisch von 2-Propanol und Aceton entfernt werden.

Auch handelsübliche Glasreiniger können schadenfrei zur Reinigung verwendet werden. Gegenüber der unbeschichteten Scheibe weist eine erfindungsgemäß beschichtete die üblicherweise beobachteten Eigenschaften von mit Griffschutz beschichteten Scheiben auf:
geringere Lichtbrechung, leichter Glanz. Sandgestrahlte Scheiben erhalten durch die erfindungsgemäße Beschichtung ein dem geätzten Glas ähnliches Aussehen.

Mit Hilfe der vorliegenden Erfindung ist eine Automatisierung der Applikation möglich, wobei das Material über eine horizontal angeordnete Portalanlage auf das mattierte Glas oder die mattierte Metalloberfläche aufgesprüht wird. Das Material kann sowohl auf gestrahlten, gebürsteten, geschliffenen, wie auch auf geätzten Glasoberflächen einschließlich keramischen Oberflächen wie beispielsweise Fliesen eingesetzt werden. Im Anschluss passieren die beschichteten Flächen eine Härtezone mit einer ausreichend intensiven UV-Quelle, deren Leistung einen einmaligen Durchlauf der Scheiben durch die Anlage ermöglicht.
Gegenüber allen am Markt verfügbaren Systemen weist dieses Material einige Vorteile auf:

Neben einer einfachen und gegebenenfalls automatisierten Applikation ist vor allem die vollständige Aushärtung und direkt mögliche Weiterverarbeitung oder Verpackung von Wichtigkeit.

Besonders bevorzugt im Sinne der vorliegenden Erfindung werden Silane der allgemeinen Formel (I) eingesetzt, die dadurch gekennzeichnet sind, dass X für eine Trialkoxygruppe mit 1 bis 4 Kohlenstoffatomen pro Alkoxygruppe steht. In gleicher Weise sind die zu vernetzenden Silane der allgemeinen Formel aus einer Gruppe von Silanen ausgewählt, wobei Y für eine Gruppe enthaltend, insbesondere ausgewählt aus 3-Methacryloxypropyl, Allyltrimethoxy, 3-Aminopropyl-, 3-Glycidyloxypropyl und Vinylmethoxy- steht. Dementsprechend sind im Sinne der vorliegenden Erfindung 3-Methacryloxypropyl-trialkoxysilane, welche auch im Handel erhältlich sind, besonders bevorzugt.

Glas im Sinne der vorliegenden Erfindung umfasst insbesondere Mineralglas. Mit Hilfe der vorliegenden Erfindung lassen sich hervorragend Oberflächen sandgestrahlter oder geätzter Form beschichten. Durch geeignete Applikationstechniken kann auch eine Mattierung auf den entsprechenden klaren und/ oder hochglänzenden Oberflächen erzeugt werden.

Die erfindungsgemäß mattierten Oberflächen enthalten neben den oben definierten vernetzten Silanen entsprechende Vernetzer bzw. UV-Härter. Diese können beispielsweise ausgewählt sein aus der Gruppe der Acetophenon-Derivate, der Propiophenone, der Phenylketone oder Benzophenone.

Neben den genannten notwendigen Bestandteilen können die erfindungsgemäßen Oberflächen weiterhin auch Farbstoffe- und/oder Pigmente enthalten. Damit ist es möglich, entsprechende Beschichtungen nicht nur farblos transparent sondern auch farbig opak auszugestalten. Farblos transparent bedeutet in diesem Fall nicht, dass der matte Oberflächeneindruck der Oberfläche verschwindet, sondern dass lediglich die Durchsicht durch die Beschichtung farblos ist. Alternativ dazu ist es möglich, durch Farbstoffe und/oder Pigmente den Transparenzgrad der Beschichtung entsprechend zu steuern.

Mit den oben genannten Bestandteilen können die erfindungsgemäßen Beschichtungen weiterhin feinteilige Oxide einer Teilchengröße im Bereich von 1 bis 50 nm, insbesondere 5 bis 35 nm in einer Menge von 0,2 bis 5 Gew.%, insbesondere von 0,5 bis 3 Gew.% aufweisen. Hierbei handelt es sich im Wesentlichen um solche Materialien, die der Beschichtung eine erhöhte kratzfeste Eigenschaft verleihen. Farbige Oxide können hierbei die Eigenschaften mit einer entsprechenden Farbgebung kombinieren.

Das erfindungsgemäße Verfahren zur Applikation der oben definierten Beschichtungen ist dadurch gekennzeichnet, dass man eine Lösung oder Suspension wenigstens eines Silans der allgemeinen Formel (I), wenigstens einen UV-Starter und gegebenenfalls wenigstens ein Farbstoff und/ oder Pigment sowie gegebenenfalls wenigstens ein feinteiliges Oxid auf die Oberfläche aufbringt und einer UV-Bestrahlung aussetzt.

Die Lösung oder Suspension der Silane wird durch ein geeignetes Lösungsmittel oder Suspendiermittel erreicht. Besonders bevorzugt in diesem Sinne sind niedere Alkohole mit 1 bis 4 Kohlenstoffatomen, da sich diese im Verlauf des Verfahrens leicht verflüchtigen.

Ebenfalls ist es möglich, die Silane der allgemeinen Formel (I) zunächst mit einer anorganischen oder organischen Säure umzusetzen, und diese hierbei zum Teil zu hydrolysieren und zu kondensieren, bevor diese mit den UV-Härtern (Startern) in Kontakt kommen. Vorteilhafterweise findet jedoch keine Vorvernetzung statt. Es wurde nämlich überraschenderweise herausgefunden, dass gerade nicht vorvernetzte Silane in gleichwertigen Oberflächen resultieren und so Prozesszeit und damit Kosten in erheblichem Umfang eingespart werden können. Das erfindungsgemäße Verfahren wird also vorteilhafterweise ohne Vorvernetzung des Silans durchgeführt.

Die erfindungsgemäß einzusetzenden Lösungen oder Suspensionen der Silane der allgemeinen Formel (I) enthalten diese in einer Menge von 0,1 bis 70 Gew.-%, insbesondere 1 bis 25 Gew.-%. Wird die Konzentration zu gering gewählt, so ist die zu verdampfende Lösungsmittelmenge zu hoch und/ oder die Oberflächenbelegung zu gering. Wird andererseits die Menge der Silane zu hoch gewählt, so ist die Viskosität der Lösungen oder Suspensionen zu hoch, so dass eine einfache Applikation nicht mehr möglich ist. Zur Vernetzung der Silane der allgemeinen Formel (I) können UV-Starter zugegeben werden. Üblich sind Mengen von 0,0001 bis 10 Gew.-% bezogen auf die zu polymerisierende Substanz. Ist die Menge der UV-Starter zu gering, so findet keine ausreichende Vernetzung statt, die Schicht wird dadurch zu weich. Wird andererseits die Menge der UV-Starter zu hoch gewählt, so resultiert eine zu spröde Schicht mit unzureichender Haftfestigkeit.

Farbstoffe und/oder Pigmente werden erfindungsgemäß in dem Verfahren dann eingesetzt, wenn man farbige oder gefärbte Griffschutzbeschichtungen erreichen möchte. Besonders bevorzugt im Sinne der vorliegenden Erfindung enthalten daher die Lösungen oder Suspensionen der Silane der allgemeinen Formel (I) 0 bis 50 Gew.-%, insbesondere 0,001 bis 25 Gew. % der Farbstoffe und/oder Pigmente. Besonders bevorzugt umfasst die Beschichtung Pigmente einer Teilchengröße im Bereich von 1 nm bis 100 µm.

Die Menge der feinteiligen, insbesondere farblosen Oxide zur Verbesserung der Kratzfestigkeit in den Lösungen oder Suspensionen der Silane der allgemeinen Formel (I) umfasst insbesondere 0,001 bis 25 Gew.-%. Besonders bevorzugt umfasst die Beschichtung feinteilige Oxide einer Teilchengröße im Bereich von 1 bis 50 nm, insbesondere 5 bis 35 nm in einer Menge von 0,2 bis 5 Gew. %, insbesondere 0,5 bis 3 Gew. %.

Die erfindungsgemäßen Beschichtungen dienen insbesondere als farbiger oder farbloser permanenter Griffschutz mattierter Oberflächen.

### Ausführungsbeispiele:

### Beispiel 1

20 g 3-Methacryloxypropyltrimethoxysilan (Dynasilan^{®} MEMO der Degussa) wurden in einem braunen Glasgefäß vorgelegt. Zugabe von 69.5 g 2-Propanol und 10.0 g Highlink OG 502-31 (Vernetzungsmittel der Fa. Clariant).
Zugabe von 0.5 g Irgacure^{®} 651 (UV-Starter, CIBA).
Das Material wurde mittels einer handelsüblichen Lackierpistole (hier SataJet^{®}) auf die zu beschichtende Mattglasscheiben auflackiert. Direkt im Anschluss wurde die gebildete Schicht mittels UV-Strahlung ausgehärtet (Energieeintrag ca. 30.000 mJ/cm².

Man erhielt eine sandgestrahlte Glasoberfläche, die der einer geätzten Glasoberfläche gleicht und die unempfindlicher gegenüber Fingerabdrücken ist.

### Beispiel 2

95 g der in Beispiel 1 beschriebenen Formulierung wurden mit 5 g des Farbstoffs Orasol^{®} Blau GL (Ciba) versetzt. Das Material wurde mittels einer handelsüblichen Lackierpistole (hier SataJet^{®}) auf die zu beschichtende Mattglasscheiben auflackiert. Direkt im Anschluss wurde die gebildete Schicht mittels UV-Strahlung ausgehärtet (Energieeintrag ca. 30.000 mJ/cm²).

## Patentansprüche

1. Mattierte gestrahlte, gebürstete, geschliffene oder geätzte Glasoberfläche mit einer Griffschutzbeschichtung eines vernetzten Silans der allgemeinen Formel (I)
X₃Si(CH₂)ₙY (I)
wobei
X eine hydrolysierbare Gruppe ist,
n einen Wert von 0, 1, 2 oder 3 hat und
Y eine organofunktionelle Gruppe ist.

2. Oberfläche nach Anspruch 1, **dadurch gekennzeichnet, dass** X für eine Trialkoxygruppe mit 1 bis 4 Kohlenstoffatomen pro Alkoxygruppe steht.

3. Oberfläche nach einem der Ansprüche 1 oder 2, **dadurch gekennzeichnet, dass** Y für eine Gruppe enthaltend, insbesondere ausgewählt aus 3-Methacryloxypropyl, 3-Aminopropyl, Allyltrimethoxy, 3-Aminopropyl-, 3-Glycidyloxypropyl und Vinylmethoxy- steht.

4. Oberfläche nach einem der Ansprüche 1 bis 3, **dadurch gekennzeichnet, dass** die Beschichtung weiterhin Farbstoffe und/ oder Pigmente umfasst.

5. Oberfläche nach einem der Ansprüche 1 bis 4, **dadurch gekennzeichnet, dass** die Beschichtung weiterhin feinteilige Oxide einer Teilchengröße im Bereich von 1 bis 50 nm, insbesondere 5 bis 35 nm in einer Menge von 0,2 bis 5 Gew. %, insbesondere 0,5 bis 3 Gew. % aufweist.

6. Oberfläche nach Anspruch 5, **dadurch gekennzeichnet, dass** die Oxide Siliziumdioxid umfasst.

7. Verfahren zur Applikation von Beschichtungen nach einem der Ansprüche 1 bis 6, **dadurch gekennzeichnet, dass** man eine Lösung oder Suspension wenigstens eines Silans der allgemeinen Formel (I), wenigstens einen UV-Starter und gegebenenfalls wenigstens ein Farbstoff und/ oder Pigment sowie gegebenenfalls wenigstens ein feinteiliges Oxid auf die Oberfläche aufbringt und einer UV-Bestrahlung aussetzt.

8. Verfahren nach Anspruch 7, **dadurch gekennzeichnet, dass** man eine Lösung oder Suspension einsetzt, die 0,1 bis 70 Gew. %, insbesondere 1 bis 25 Gew.-% der Silane der allgemeinen Formel (I) einsetzt.

9. Verfahren nach Anspruch 8, **dadurch gekennzeichnet, dass** man die Silane gegebenenfalls in teilweise hydrolysierter Form einsetzt.

10. Verfahren nach Anspruch 7, **dadurch gekennzeichnet, dass** man eine Lösung oder Suspension einsetzt, die 0,0001 bis 10 Gew. % der UV-Starter enthält.

11. Verfahren nach Anspruch 7, **dadurch gekennzeichnet, dass** man eine Lösung oder Suspension einsetzt, die 0 bis 50 Gew. %, insbesondere 0,001 bis 25 Gew. % Farbstoffe und/ oder Pigmente enthält.

12. Verfahren nach Anspruch 7, **dadurch gekennzeichnet, dass** man eine Lösung oder Suspension einsetzt, die 0,001 bis 25 Gew. % feinteilige, insbesondere farblose Oxide einsetzt.

13. Verwendung einer Beschichtung nach einem der Ansprüche 1 bis 6 als farbiger oder farbloser permanenter Griffschutz mattierter Oberflächen.
